# FASCICULE DE BREVET EUROPEEN

(11) **EP 2 134 115 B1**
(45) Date de publication et mention de la délivrance du brevet: **16.01.2019**
(21) Numéro de dépôt: 09162474.2
(22) Date de dépôt: 11.06.2009
(51) Int. Cl.: H04W 12/12, H04W 12/06, H04W 24/08, H04L 29/06, H04W 4/14

(54) **Detection d'anomalie de trafic emis par un terminal mobile dans un réseau de radiocommunication**
Detektion von anormalen Verhalten des Datenverkehrs von einem mobilen Endgerät in einem Radio-Kommunikationssystem
Detection of abnormal behavior of traffic transmitted from a mobile terminal in a radiocommunication network

(30) Priorité: 12.06.2008 FR 0853903
(43) Date de publication de la demande: 16.12.2009
(73) Titulaire: Alcatel Lucent, 91620 Nozay (FR)
(72) Inventeur: Dubois, Jean-Marie, 78141, VELIZY (FR); Raynaud, René, 91620, NOZAY (FR)
(74) Mandataire: Nokia EPO representatives

(56) Documents cités:
- EP-A- 1 771 031
- WO-A-01/45444
- US-A- 5 978 669
- US-A1- 2006 236 390
- US-A1- 2007 275 741
- "3rd Generation Partnership Project; Technical Specification Group Core Network; Mobile Application Part (MAP) specification (3G TS 29.002 version 3.3.2 Release 99)", 3GPP STANDARD; 3G TS 29.002, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V3.3.2, 1 April 2000 (2000-04-01), pages 1-1206, XP050370743,

## Description

La présente invention concerne une détection de fonctionnement anormal de terminal mobile dans un réseau de radiocommunication, par exemple dû à la présence d'un virus dans le terminal mobile qui engendre une anomalie de trafic émis par le terminal mobile.

Actuellement, les terminaux mobiles sont de plus en plus complexes et implémentent des systèmes d'exploitation qui peuvent être infectés par des virus ou être les cibles d'attaques malveillantes.

Certains types de virus conduisent à l'émission de messages courts SMS ("Short Message Service" en anglais) depuis un terminal mobile infecté vers un autre terminal ayant un numéro d'appel donné, ce qui augmente de manière incontrôlée la facture relative à l'utilisation du terminal mobile infecté. D'autres types de virus peuvent aboutir à un dysfonctionnement d'un terminal mobile et à une consommation inutile de ressources du terminal mobile ou du réseau de radiocommunication auquel est rattaché le terminal mobile.

Les demandes de brevet US2007/0275741 et EP1771031 divulguent des procédés de détection des anomalies de trafic émis par des terminaux mobiles.

Il existe donc un besoin de détecter rapidement un comportement anormal d'un terminal mobile, dû par exemple à la présence d'un virus dans le terminal mobile, afin de limiter des conséquences néfastes du comportement anormal du terminal mobile.

Un objectif de l'invention est de détecter un comportement anormal d'un terminal mobile lié au trafic de données émis par le termina! mobile dans un réseau de radiocommunication afin qu'au moins une entité du réseau de radiocommunication puisse lancer des actions pour remédier au comportement anormal détecté.

Pour atteindre cet objectif, un procédé selon l'invention pour détecter une anomalie de trafic émis par au moins un terminal mobile dans un réseau de radiocommunication est défini par la revendication indépendante 1.

Avantageusement, l'invention offre une fonctionnalité supplémentaire au réseau de radiocommunication pour détecter une activité anormale d'un terminal mobile telle qu'une anomalie de trafic émis par le terminal mobile. Une collaboration entre ledit dispositif et l'enregistreur de localisation du réseau de radiocommunication permet de détecter une anomalie de trafic quelle que soit la localisation du terminal mobile.

Selon une réalisation de l'invention, le réseau peut surveiller indirectement le trafic émis par le terminal mobile et détecter une éventuelle anomalie de trafic de manière rapide et réactive en fonction de la durée de l'intervalle de temps prédéterminé, afin de minimiser les effets néfastes d'une telle anomalie.

Selon une autre caractéristique de l'invention, le compte d'authentification peut être remis à zéro à l'expiration de l'intervalle de temps prédéterminé.

Selon d'autres caractéristiques de l'invention, le compte d'authentification par le terminal mobile, tel qu'un changement de localisation du terminal mobile. Le terminal mobile étant authentifié pour tout type de procédure, l'invention permet de détecter tout type d'anomalie de trafic émis par le terminal mobile, et en particulier un virus ayant infecté le terminal mobile et commandant par exemple une émission automatique et régulière de messages courts.

Selon une autre caractéristique de l'invention, le procédé peut comprendre en outre une transmission d'un message d'alerte comprenant un identificateur du terminal mobile et un code d'alerte à un serveur relié au réseau de radiocommunication, suite à la détection d'une anomalie de trafic relative au terminal mobile. De manière automatique, le réseau peut prendre une décision adéquate pour traiter l'anomalie. Par exemple, ledit serveur peut transmettre un message au terminal mobile pour avertir l'utilisateur de ce dernier que le terminal mobile a un dysfonctionnement.

Le message d'alerte peut être interprété par le serveur de différentes manières, par exemple comme une signalisation d'une détection d'un éventuel comportement anormal du terminal mobile ou comme une signalisation d'une détection sûre d'un virus dans le terminal mobile.

Suite à la réception et l'analyse du message d'alerte, le serveur peut commander automatiquement un blocage administratif du terminal mobile, tel qu'un blocage partiel interdisant toute émission de message court depuis le terminal mobile, un blocage partie! interdisant toute communication relative à des appels ou des émissions de messages courts depuis le terminal mobile, ou encore un blocage total interdisant toute activité du terminal mobile, y compris la possibilité pour le terminal mobile de recevoir des appels ou messages ou de s'attacher au réseau.
L'invention concerne également un dispositif apte à communiquer avec un enregistreur de localisation d'un réseau de radio communication pour détecter une anomalie de trafic émis depuis au moins un terminal mobile dans le réseau de radiocommunication, défini par la revendication indépendante 9.

La présente invention et les avantages qu'elle procure seront mieux compris au vu de la description ci-après faite en référence aux figures annexées, dans lesquelles :
- la figure 1 est un bloc-diagramme schématique d'un système de communication incluant un dispositif de détection d'anomalie relative à un terminal mobile dans un réseau de radiocommunication selon l'invention ; et
- la figure 2 est un algorithme d'un procédé de détection d'anomalie relative à un terminal mobile dans un réseau de radiocommunication selon l'invention.

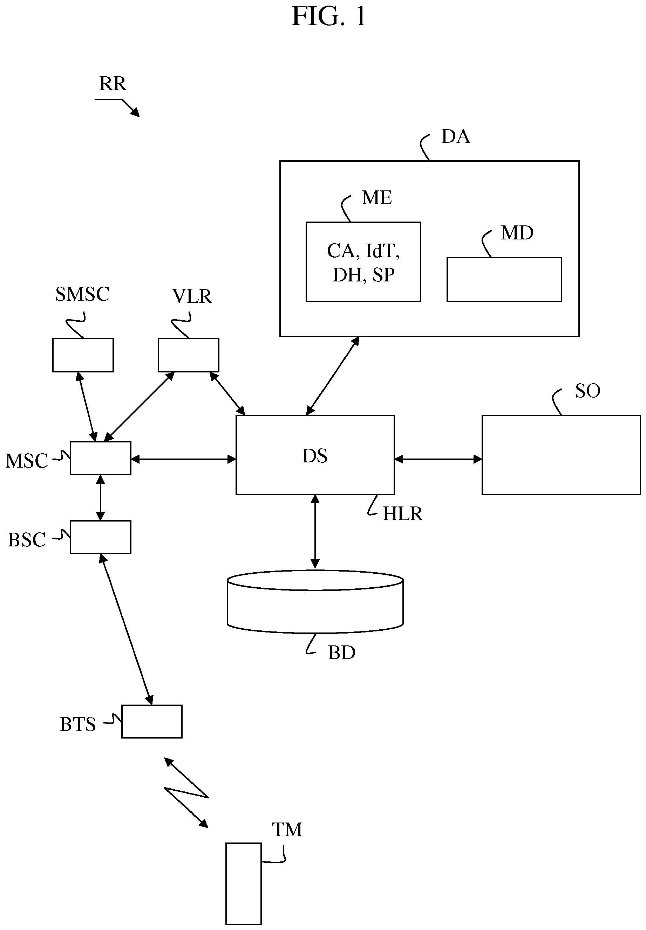

En référence à la figure 1, un système de communication selon l'invention comprend notamment un réseau de radiocommunication RR, un dispositif d'alerte DA, un serveur d'opérateur SO relié à ou inclus dans le réseau de radiocommunication RR et au moins un termina! mobile TM.

Par exemple, le réseau de radiocommunication RR est un réseau de radiocommunication cellulaire numérique de type GSM (« Global System for Mobile communications » en anglais) ou UMTS (« Universal Mobile Telecommunications System » en anglais) ou encore CDMA ("Code Division Multiple Access" en anglais). Le réseau de type GSM peut être accolé à un réseau GPRS (« General Packet Radio Service » en anglais) pour la transmission de données par paquets avec gestion de la mobilité et accès par voie radio. A titre d'exemple, le réseau de radiocommunication RR est apte à autoriser un terminal mobile à émettre et recevoir des données à travers le réseau RR lorsque l'utilisateur du terminal mobile est identifié auprès du réseau par exemple par l'intermédiaire d'un module d'identification d'abonné associé au terminal mobile.

Dans la figure 1 sont représentés des éléments de la zone de localisation du réseau RR de type GSM où l'équipement communicant est situé, La zone de localisation comprend un commutateur de service mobile MSC (« Mobile service Switching Center » en anglais) qui est relié à travers un contrôleur de station de base BSC (« Base Station Controller » en anglais) à une station de base BTS (« Base Transceiver Station » en anglais) connectée par une liaison radio au terminal mobile TM.

Le réseau RR comprend un enregistreur de localisation nominal HLR (« Home Location Register » en anglais) et un ou plusieurs enregistreurs de localisation VLR (« Visitor Location Register » en anglais) reliés au commutateur MSC. L'enregistreur HLR gère une base de données BD contenant notamment une identité internationale IMSI (« International Mobile Subscriber Idenitity » en anglais) associée à un profil d'abonnement de chaque usager du réseau RR et le numéro de l'enregistreur VLR auquel le terminal mobile TM est rattaché momentanément. L'enregistreur VLR est un relais de l'enregistreur HLR et contient des caractéristiques des usagers situés dans la zone de localisation pour gérer la mobilité de ces derniers.

L'enregistreur HLR, par l'intermédiaire d'un centre d'authentification AUC ("Authentication Center" en anglais), assure une authentification de chaque terminal mobile du réseau de radiocommunication, par exemple au moyen de la carte SIM ("Subscriber Identity Module" en anglais) incluse dans le terminal mobile. En particulier, l'enregistreur HLR génère des données de sécurité DS sous forme de vecteur d'authentification et transmet ces données à une entité du réseau requérant l'authentification du terminal mobile. Si le réseau de radiocommunication est de type GSM, le vecteur d'authentification peut comprendre un challenge aléatoire RAND, une signature SRES et une clé de chiffrement Kc, pour authentifier le terminal mobile et chiffrer toutes les communications entre le terminal mobile et le réseau de radiocommunications, telles que des appels, des envois de messages courts SMS, des envois de messages USSD ("Unstructured Supplementary Service Data" en anglais), etc. Si le réseau de radiocommunication est de type UMTS, le vecteur d'authentification peut comprendre un challenge aléatoire RAND, une réponse attendue XRES, une clé de chiffrement Kc, une clé d'intégrité IK et un jeton d'authentification AUTN.

Chaque carte SIM partage une clé secrète Ki avec l'enregistreur HLR. La clé secrète est par exemple un mot, une séquence de mots ou un nombre d'une longueur de 128 bits, et est mémorisée de façon sécurisée à la fois dans la carte SIM et dans l'enregistreur HLR.

L'authentification du terminal mobile peut être requise par une entité du réseau, telle qu'un enregistreur VLR, par exemple à chaque mise à jour de localisation, à chaque établissement d'appel ou avant d'activer ou de désactiver certains services supplémentaires. Par ailleurs, un challenge aléatoire RAND généré par l'enregistreur HLR, par exemple d'une longueur de 128 bits, peut être transmis au terminal mobile.

Par exemple, le terminal mobile détermine une signature du challenge aléatoire RAND reçu depuis le réseau en fonction d'un algorithme d'authentification A3 appliqué à la clé secrète Ki et au challenge RAND. La signature est envoyée par le terminal mobile au réseau pour authentifier le termina! mobile, en comparant la signature déterminée par le terminal mobile à la signature SRES initialement transmise par l'enregistreur HLR en correspondance avec le challenge RAND,

Par ailleurs, le terminal mobile détermine une clé de chiffrement Kc en fonction d'un algorithme de détermination de clé de chiffrement A8 appliqué à la clé secrète Ki et au challenge RAND. Un algorithme de chiffrement A5 est ensuite appliqué à la clé de chiffrement Kc pour chiffrer des communications entre le terminal mobile et le réseau.

Généralement, l'enregistreur HLR génère les vecteurs d'authentification contenant des données de sécurité DS par série de plusieurs vecteurs. A la demande d'une entité du réseau, telle qu'un enregistreur VLR, l'enregistreur HLR génère un nombre prédéfini de vecteurs d'authentification, et l'enregistreur HLR transmet directement ces vecteurs à l'entité du réseau ou stocke éventuellement ces vecteurs générés. L'enregistreur fournit ces vecteurs à une entité du réseau lorsque cette dernière requiert au moins un vecteur pour une procédure requérant une authentification et relative au terminal mobile, par exemple pour l'établissement d'un appel ou l'envoi d'un message. Chaque vecteur est utilisé une seule fois et l'enregistreur HLR génère et transmet de nouveaux vecteurs d'authentification comprenant des données de sécurité dès que tous les vecteurs d'authentification précédemment transmis ont été utilisés.

Selon l'invention, le dispositif d'alerte DA est apte à détecter des anomalies relatives au fonctionnement d'un ou plusieurs terminaux mobiles rattachés au réseau de radiocommunication, en fonction de données gérées par l'enregistreur HLR. Selon une réalisation, le dispositif d'alerte DA est relié directement ou indirectement à l'enregistreur HLR via un réseau de communication par paquets. Selon une autre réalisation, le dispositif d'alerte DA est inclus dans l'enregistreur HLR. En variante, le dispositif d'alerte DA et l'enregistreur HLR sont confondus en une même entité.

Le dispositif d'alerte DA comprend un module d'évaluation ME comprenant des compteurs d'authentification en nombre suffisant pour être assignés respectivement aux terminaux mobiles. En particulier, un compte d'authentification CA est associé à un identificateur IdT d'un terminal mobile donné et est incrémenté lorsque des données de sécurité DS sont transmises à une entité du réseau pour une authentification du terminal mobile. Par la suite, le compte CA du compteur d'authentification sera entendu comme la valeur du compteur d'authentification à un instant donné et les différents comptes du compteur d'authentification peuvent correspondre aux différentes valeurs que peut prendre le compteur d'authentification.

Selon l'invention, le compte d'authentification CA est incrémenté d'une unité lorsqu'un vecteur d'authentification comprenant des données de sécurité est transmis. Par conséquent, le compte est incrémenté par exemple de cinq unités dès que l'enregistreur HLR transmet une série de cinq vecteurs d'authentification. Selon un autre exemple, le compte est incrémenté seulement d'une unité lorsque l'enregistreur HLR transmet une série de vecteurs d'authentification.

Par exemple, l'identificateur de terminal mobile IdT peut être un numéro d'appel du terminal mobile ou une identité internationale IMSI. L'enregistreur HLR peut disposer d'une identité de terminal mobile IMEI (« International Mobile Equipment Identity » en anglais) par exemple lorsque l'enregistreur VLR lui transmet lors d'une procédure de localisation du terminal mobile ou lors d'une mise à jour effectuée dès que l'abonné change de terminal mobile.

Dans le module d'évaluation ME est mémorisé au moins un seuil prédéfini SP auquel est comparé le compte CA de chaque compteur d'authentification. La valeur du seuil est significative d'une anomalie de fonctionnement du terminal mobile et correspond par exemple à des actions automatiques ou répétées qui ne peuvent pas être exécutées par un utilisateur du terminal mobile. Par exemple, le seuil prédéfini a une valeur égale à "100" et correspond à la transmission d'une centaine de vecteurs d'authentification comprenant des données de sécurité pendant un intervalle de temps prédéterminé, par exemple d'une vingtaine de minutes.

Le module d'évaluation ME détecte une anomalie lorsque le seuil prédéfini est dépassé par un compte d'authentification.

Le module d'évaluation ME peut activer simultanément un horodateur avec le compteur d'authentification pour mémoriser des données d'horodatage DH en correspondance avec les comptes d'authentification.

Dans une réalisation de l'invention, les données d'horodatage servent à faire courir un intervalle de temps prédéterminé de sorte que le compte est remis à zéro à l'expiration de l'intervalle de temps prédéterminé. L'intervalle de temps prédéterminé est par exemple périodique, c'est-à-dire l'intervalle de temps peut être répété et avoir à chaque fois la même durée ou une durée différente. L'intervalle de temps prédéterminé peut correspondre ainsi à une période de surveillance pendant laquelle le compte d'authentification est incrémenté avant d'être remis à zéro à l'expiration de la période de surveillance, de manière à incrémenter de nouveau le compte pendant une autre période de surveillance. Par exemple, à l'expiration de la période de surveillance ou après l'expiration de la période de surveillance, le module d'évaluation ME compare le compte d'authentification au seuil prédéfini et détecte une anomalie lorsque le seuil prédéfini est dépassé par le compte. Selon un autre exemple, le module d'évaluation ME compare le compte d'authentification au seuil prédéfini dès que ce dernier est incrémenté, afin de détecter une anomalie sans attendre l'expiration de la période de surveillance.

La valeur du seuil prédéfini dépend de la durée de l'intervalle de temps prédéterminé, ces valeurs étant déterminées par l'opérateur du réseau de radiocommunication. Par exemple, le seuil prédéfini correspond à la transmission d'une cinquantaine de vecteurs d'authentification comprenant des données de sécurité pendant une période de dix minutes.

Dans une autre réalisation de l'invention, chaque compte d'authentification CA d'un compteur est mémorisé en correspondance avec des données d'horodatage DH de sorte que le module d'évaluation ME puisse vérifier que le compte d'authentification n'a pas été incrémenté d'une valeur supérieure au seuil prédéfini pendant l'intervalle de temps prédéterminé.

Le dispositif d'alerte DA comprend en outre un module de détection MD coopérant avec le module d'évaluation ME lorsque ce dernier a détecté une anomalie, afin de transmettre un message d'alerte au serveur d'opérateur SO.

Selon l'invention, le serveur d'opérateur SO est apte à effectuer des opérations suite à la détection d'une anomalie par le dispositif d'alerte DA. Le serveur d'opérateur SO peut être relié directement ou indirectement au dispositif d'alerte DA via un réseau de communication par paquets, par exemple l'internet. Selon la réalisation illustrée à la figure 1, le serveur d'opérateur SO peut transmettre des messages de données au terminal mobile TM à travers un serveur de messages courts SMSC ("Short Message Service Centre" en anglais). Le serveur SMSC comporte une passerelle d'accès pour communiquer avec le serveur d'opérateur SO à travers un réseau de paquets et une autre passerelle d'accès pour communiquer avec au moins le commutateur de service mobile MSC à travers un réseau de paquets. Les paquets transmis par le serveur SO sont formatés dans le serveur SMSC en messages courts SMS et/ou en messages multimédias MMS ("Multimedia Messaging Service" en anglais) transmis au terminal mobile TM.

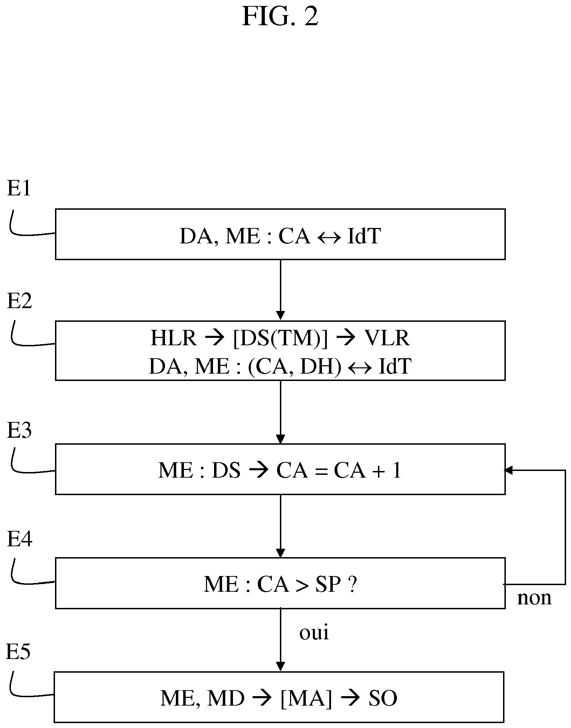

En référence à la figure 2, un procédé de détection d'anomalie de trafic émis par un terminal mobile selon l'invention comprend des étapes E1 à E5 exécutées automatiquement dans le système de communication selon l'invention.

A l'étape E1, après une souscription de l'utilisateur du terminal mobile TM auprès de l'opérateur du réseau de radiocommunication RR, un profil de l'utilisateur est créé dans l'enregistreur HLR. Le module d'évaluation ME du dispositif d'alerte DA assigne un compteur d'authentification au terminal mobile. Des comptes d'authentification CA du compteur d'authentification sont mémorisés en correspondance avec un identificateur IdT du terminal mobile.

A l'étape E2, une entité du réseau, telle que l'enregistreur VLR de la zone de localisation du terminal mobile, requiert une authentification de la carte SIM incluse dans le terminal mobile, suite au déclenchement d'une procédure relative au terminal mobile et requérant l'authentification de ce dernier. Par exemple, lorsque le terminal mobile TM est mis sous tension, une procédure de localisation est déclenchée par l'enregistreur VLR de la zone de localisation du terminal mobile, et peut être suivie d'une procédure d'établissement d'appel si l'utilisateur du terminai mobile souhaite passer un appel. A cette fin, l'enregistreur VLR requiert à l'enregistreur HLR la fourniture de données de sécurité DS sous forme de vecteur d'authentification comprenant par exemple un challenge aléatoire RAND, une signature SRES et une clé de chiffrement Kc pour authentifier le terminal mobile. Par exemple, l'enregistreur VLR transmet le challenge aléatoire RAND au terminal mobile afin que la carte SIM effectue un calcul cryptographique en appliquant le challenge aléatoire reçu et une clé secrète Ki à un algorithme d'authentification A3 pour produire une signature SRES. Le terminal mobile transmet la signature produite à l'enregistreur VLR qui la compare à la signature incluse dans le vecteur d'authentification transmis par l'enregistreur HLR.

Le module d'évaluation ME du dispositif d'alerte DA active simultanément un horodateur avec le compteur d'authentification pour mémoriser des données d'horodatage DH en correspondance avec des comptes d'authentification CA du compteur d'authentification. Les données d'horodatage et les comptes d'authentification sont mémorisés en outre en correspondance avec l'identificateur IdT du terminal mobile.

A l'étape E3, pendant un intervalle de temps prédéterminé, tel qu'un délai périodique, le module d'évaluation ME incrémente le compte d'authentification CA lorsque des données de sécurité DS sont transmises par l'enregistreur HLR à une entité du réseau telle que l'enregistreur VLR pour authentifier le terminal mobile TM.

L'étape E3 est répétée à chaque fois que des données de sécurité DS sont transmises pour authentifier le terminal mobile TM.

A l'étape E4, le module d'évaluation ME compare le compte d'authentification CA à un seuil prédéfini SP afin de vérifier si le compte d'authentification CA excède le seuil prédéfini SP en fonction de données d'horodatage DH précédemment mémorisées.

Si le compte d'authentification CA n'excède pas le seuil prédéfini SP, le procédé repasse à l'étape E3. Le module d'évaluation ME vérifie si le compte d'authentification CA excède le seuil prédéfini à l'expiration de l'intervalle de temps prédéterminé et le compte d'authentification CA est remis à zéro si le compte d'authentification CA n'excède pas le seuil prédéfini. En variante, le module d'évaluation ME compare le compte d'authentification CA au seuil prédéfini SP à chaque fois que le compte est incrémenté pendant l'intervalle de temps prédéterminé. Dans une autre variante, le compte d'authentification est comparé au seuil prédéfini après l'expiration de l'intervalle de temps prédéterminé.

Si le compte d'authentification CA excède le seuil prédéfini SP, le module d'évaluation ME détecte une anomalie à l'étape E5 et commande le module de détection MD afin que ce dernier transmette un message d'alerte MA à un serveur d'opérateur SO.

Le message d'alerte MA contient par exemple l'identificateur IdT du terminal mobile TM et un code d'alerte correspondant au seuil prédéfini. Par exemple, le code d'alerte est un mot tel que "VIRUS" ou une combinaison de chiffres et/ou de lettres permettant au serveur d'opérateur SO d'identifier la nature de l'alerte et d'effectuer automatiquement des opérations pour limiter les conséquences néfastes de l'anomalie de trafic émis par le terminal mobile.

Optionnellement, le message d'alerte MA peut contenir une indication sur la date à laquelle le seuil a été dépassé par un compte CA et sur le temps mis par le compteur pour dépasser ce seuil.

A titre d'exemples, le serveur d'opérateur SO peut ainsi transmettre un message court SMS au terminal mobile TM, si un numéro d'appel de ce dernier a été transmis dans le message d'alerte par le dispositif d'alerte DA, afin d'avertir l'utilisateur du terminal mobile qu'un virus a été détecté, ou bien déclencher des actions dans le réseau de radiocommunications pour stopper l'émission anormale du trafic émis par le terminal mobile.

Les actions effectuées par le serveur SO peuvent être paramétrées et modifiées à tout moment. Différentes actions peuvent être effectuées consécutivement pour traiter l'anomalie. Par exemple, un ou plusieurs messages d'avertissement peuvent être transmis à des intervalles de temps prédéterminés au terminal mobile avant de commander un blocage du terminal mobile. Le serveur SO peut en outre assurer différents types de surveillance de terminaux mobiles, incluant par exemple une surveillance de tous les terminaux mobiles, une surveillance restreinte à un sous-ensemble d'utilisateurs de terminaux mobiles identifiés par une identité internationale IMSI, ou bien une surveillance restreinte à un sous-ensemble d'utilisateurs de terminaux mobiles possédant certains types de terminaux identifiés par une identité internationale IMEI.

L'invention n'est pas limitée au mode de réalisation décrit précédemment, mais englobe toute variante qui en reproduit les caractéristiques essentielles. En particulier, l'invention concerne tout réseau de communication utilisant des données de sécurité qui peuvent être transmises à une entité du réseau pour authentifier le terminal mobile lorsqu'une procédure relative au terminal mobile nécessite une authentification de ce dernier.

## Revendications

1. Procédé pour détecter une anomalie de trafic émis par au moins un terminal mobile (TM) dans un réseau de radiocommunication (RR), ledit procédé comprenant les étapes suivantes dans un dispositif (DA) inclus dans un enregistreur de localisation (HLR) du réseau de radiocommunication (RR) :
pendant au moins un intervalle de temps prédéterminé, incrémenter (E3) un compte d'authentification (CA) assigné au terminal mobile, lorsque des données de sécurité (DS) sont transmises depuis l'enregistreur de localisation (HLR) à un enregistreur relais (VLR) pour authentifier le terminal mobile, les données de sécurité étant des vecteurs d'authentification et le compte d'authentification (CA) étant incrémenté d'une unité par vecteur d'authentification transmis, et
comparer (E4) le compte d'authentification à un seuil prédéfini (SP) afin de détecter (E5) une anomalie de trafic émis par le terminal mobile si le compte d'authentification excède le seuil prédéfini (SP).

2. Procédé conforme à la revendication 1, selon lequel le compte d'authentification est comparé au seuil prédéfini (SP) à l'expiration de l'intervalle de temps prédéterminé.

3. Procédé conforme à la revendication 1 ou 2, selon lequel le compte d'authentification est remis à zéro à l'expiration de l'intervalle de temps prédéterminé.

4. Procédé conforme à l'une des revendications 1 à 3, selon lequel le compte d'authentification est comparé au seuil prédéfini (SP) à chaque fois que le compte d'authentification est incrémenté.

5. Procédé conforme à l'une des revendications 1 à 4, selon lequel un ensemble de données de sécurité (DS) est transmis à une entité du réseau pour authentifier le terminal mobile (TM) et le compte d'authentification (CA) assigné au terminal mobile est incrémenté d'au moins une unité lorsque ledit ensemble est transmis.

6. Procédé conforme à l'une des revendications 1 à 5, comprenant en outre une transmission d'un message d'alerte comprenant un identificateur (IdT) du terminal mobile et un code d'alerte à un serveur (SO) relié au réseau de radiocommunication (RR), suite à la détection d'une anomalie de trafic relative au terminal mobile.

7. Procédé conforme à la revendication 6, selon lequel, suite à une analyse du message d'alerte reçu, le serveur (SO) transmet au moins un message d'avertissement relatif à l'anomalie détectée au terminal mobile (TM).

8. Procédé conforme à la revendication 6 ou 7, selon lequel, suite à une analyse du message d'alerte reçu, le serveur (SO) commande un blocage du terminal mobile (TM).

9. Dispositif (DA) inclus dans un enregistreur de localisation (HLR) d'un réseau de radiocommunication (RR) pour détecter une anomalie de trafic émis depuis au moins un terminal mobile (TM) dans le réseau de radiocommunication (RR), le dispositif comprenant :
des moyens (ME) pour incrémenter un compte d'authentification (CA) assigné au terminal mobile pendant au moins un intervalle de temps prédéterminé, lorsque des données de sécurité (DS) sont transmises depuis l'enregistreur de localisation (HLR) à un enregistreur relais (VLR)pour authentifier le terminal mobile, les données de sécurité étant des vecteurs d'authentification et le compte d'authentification (CA) étant incrémenté d'une unité par vecteur d'authentification transmis, et
des moyens (ME) pour comparer le compte d'authentification à un seuil prédéfini (SP) afin de détecter une anomalie de trafic émis par le terminal mobile si le compte d'authentification excède le seuil prédéterminé.

## Patentansprüche

1. Verfahren zur Detektion einer Anomalie des von wenigstens einem mobilen Endgerät (TM) in einem Funkkommunikationsnetz (RR) gesendeten Verkehrs, wobei das Verfahren die folgenden Schritte in einer Vorrichtung (DA), die in einem Heimatortsregister (HLR) des Funkkommunikationsnetzes (RR) enthalten ist, umfasst:
während wenigstens eines vorbestimmten Zeitintervalls, Inkrementieren (E3) eines Authentifizierungszählers (CA), der dem mobilen Endgerät zugewiesen ist, wenn Sicherheitsdaten (DS) von dem Heimatortsregister (HLR) zu einem Besucherortsregister (VLR) übertragen werden, um das mobile Endgerät zu authentifizieren, wobei die Sicherheitsdaten Authentifizierungsvektoren sind und der Authentifizierungszähler (CA) um eine Einheit pro übertragenen Authentifizierungsvektor inkrementiert wird, und
Vergleichen (E4) des Authentifizierungszählers mit einem vordefinierten Schwellenwert (SP), um eine Anomalie des von dem mobilen Endgerät gesendeten Verkehrs zu detektieren (E5), falls der Authentifizierungszähler den vordefinierten Schwellenwert (SP) überschreitet.

2. Verfahren nach Anspruch 1, wobei der Authentifizierungszähler mit dem vordefinierten Schwellenwert (SP) nach Ablauf des vorbestimmten Zeitintervalls verglichen wird.

3. Verfahren nach Anspruch 1 oder 2, wobei der Authentifizierungszähler nach Ablauf des vorbestimmten Zeitintervalls auf null zurückgesetzt wird.

4. Verfahren nach einem der Ansprüche 1 bis 3, wobei der Authentifizierungszähler mit dem vordefinierten Schwellenwert (SP) jedes Mal verglichen wird, wenn der Authentifizierungszähler inkrementiert wird.

5. Verfahren nach einem der Ansprüche 1 bis 4, wobei ein Satz von Sicherheitsdaten (DS) zu einer Einheit des Netzes übertragen wird, um das mobile Endgerät (TM) zu authentifiziere, und der dem mobilen Endgerät zugewiesene Authentifizierungszähler (CA) um wenigstens eine Einheit inkrementiert wird, wenn der Satz übertragen wird.

6. Verfahren nach einem der Ansprüche 1 bis 5, welches außerdem eine Übertragung einer Alarmnachricht, die eine Kennung (IdT) des mobilen Endgerätes und einen Alarmcode umfasst, zu einem mit dem Funkkommunikationsnetz (RR) verbundenen Server (SO) im Anschluss an die Detektion einer Anomalie des Verkehrs in Bezug auf das mobile Endgerät umfasst.

7. Verfahren nach Anspruch 6, wobei der Server (SO) im Anschluss an eine Analyse der empfangenen Alarmnachricht wenigstens eine Warnnachricht in Bezug auf die detektierte Anomalie zu dem mobilen Endgerät (TM) überträgt.

8. Verfahren nach Anspruch 6 oder 7, wobei der Server (SO) im Anschluss an eine Analyse der empfangenen Alarmnachricht eine Sperrung des mobilen Endgerätes (TM) bewirkt.

9. Vorrichtung (DA), die in einem Heimatortsregister (HLR) eines Funkkommunikationsnetzes (RR) enthalten ist, zur Detektion einer Anomalie des von wenigstens einem mobilen Endgerät (TM) in dem Funkkommunikationsnetz (RR) gesendeten Verkehrs, wobei die Vorrichtung umfasst:
Mittel (ME) zum Inkrementieren eines Authentifizierungszählers (CA), der dem mobilen Endgerät zugewiesen ist, während wenigstens eines vorbestimmten Zeitintervalls, wenn Sicherheitsdaten (DS) von dem Heimatortsregister (HLR) zu einem Besucherortsregister (VLR) übertragen werden, um das mobile Endgerät zu authentifizieren, wobei die Sicherheitsdaten Authentifizierungsvektoren sind und der Authentifizierungszähler (CA) um eine Einheit pro übertragenen Authentifizierungsvektor inkrementiert wird, und
Mittel (ME) zum Vergleichen des Authentifizierungszählers mit einem vordefinierten Schwellenwert (SP), um eine Anomalie des von dem mobilen Endgerät gesendeten Verkehrs zu detektieren, falls der Authentifizierungszähler den vorbestimmten Schwellenwert überschreitet.

## Claims

1. Method for detecting abnormal behaviour of traffic transmitted by at least one mobile terminal (TM) in a radiocommunication network (RR), said method comprising the following steps in a device (DA) included in a location register (HLR) of the radiocommunication network (RR) :
during at least one predetermined time interval, incrementing (E3) an authentication count (CA) assigned to the mobile terminal when security data (DS) are transmitted from the location register (HLR) to an intermediate register (VLR) in order to authenticate the mobile terminal, the security data being authentication vectors and the authentication count (CA) being incremented by one unit for each authentication vector transmitted, and
comparing (E4) the authentication count with a predefined threshold (SP) in order to detect (E5) abnormal behaviour of the traffic transmitted by the mobile terminal if the authentication count exceeds the predefined threshold (SP) .

2. Method according to Claim 1, according to which the authentication count is compared with the predefined threshold (SP) on the expiry of the predetermined time interval.

3. Method according to Claim 1 or 2, according to which the authentication count is reset to zero on the expiry of the predetermined time interval.

4. Method according to any of Claims 1 to 3, according to which the authentication count is compared with the predefined threshold (SP) whenever the authentication count is incremented.

5. Method according to any of Claims 1 to 4, according to which a set of security data (DS) is transmitted to a network entity to authenticate the mobile terminal (TM), and the authentication count (CA) assigned to the mobile terminal is incremented by at least one unit when said set is transmitted.

6. Method according to any of Claims 1 to 5, further comprising a transmission of an alert message comprising an identifier (IdT) of the mobile terminal and an alert code to a server (SO) connected to the radiocommunication network (RR), following the detection of abnormal behaviour of traffic relating to the mobile terminal.

7. Method according to Claim 6, according to which, after an analysis of the alert message received, the server (SO) transmits at least one warning message relating to the detected abnormal behaviour to the mobile terminal (TM).

8. Method according to Claim 6 or 7, according to which, after an analysis of the alert message received, the server (SO) causes the mobile terminal (TM) to be blocked.

9. Device (DA) included in a location register (HLR) of a radiocommunication network (RR) for detecting abnormal behaviour of traffic transmitted from at least one mobile terminal (TM) in the radiocommunication network (RR), the device comprising:
means (ME) for incrementing an authentication count (CA) assigned to the mobile terminal during at least one predetermined time interval, when security data (DS) are transmitted from the location register (HLR) to an intermediate register (VLR) in order to authenticate the mobile terminal, the security data being authentication vectors and the authentication count (CA) being incremented by one unit for each authentication vector transmitted, and
means (ME) for comparing the authentication count with a predefined threshold (SP) in order to detect abnormal behaviour of the traffic transmitted by the mobile terminal if the authentication count exceeds the predefined threshold.
